# EUROPÄISCHE PATENTSCHRIFT

(11) **EP 2 783 928 B1**
(45) Veröffentlichungstag und Bekanntmachung des Hinweises auf die Patenterteilung: **16.05.2018**
(21) Anmeldenummer: 14160903.2
(22) Anmeldetag: 20.03.2014
(51) Int. Cl.: B60T 8/17

(54) **Verfahren und Vorrichtung zur Abbremsung eines Anhängers einer Zugfahrzeug-Anhängerkombination**
Method and device for braking a trailer of a towing vehicle trailer combination
Procédé et dispositif de freinage d'une remorque d'une combinaison véhicule de traction-remorque

(30) Priorität: 26.03.2013 DE 102013103068
(43) Veröffentlichungstag der Anmeldung: 01.10.2014
(73) Patentinhaber: KNORR-BREMSE Systeme für Nutzfahrzeuge GmbH, 80809 München (DE)
(72) Erfinder: Mederer, Martin, 92318 Neumarkt (DE); Buchner, Hermann, 94330 Aiterhofen (DE); Wimmer, Andreas, 85368 Moosburg (DE)

(56) Entgegenhaltungen:
- WO-A1-2007/008150
- WO-A1-2013/004314
- DE-A1-102007 023 345
- DE-A1-102009 050 793

## Beschreibung

Die Erfindung betrifft ein Verfahren und eine Vorrichtung zur Abbremsung wenigstens eines Anhängers einer Zugfahrzeug-Anhängerkombination gemäß den Oberbegriffen der Ansprüche 1 und 4.

Die Erfindung kommt bei Zugfahrzeug-Anhänger-Kombinationen zum Einsatz, wobei das Zugfahrzeug eine elektro-pneumatische Reibungsbremsanlage in Form eines elektronisch geregelten Bremssystems (EBS) und der Anhänger eine elektro-pneumatische Betriebsbremsanlage in Form eines elektronisch geregelten Bremssystems (TEBS) aufweist. Die Anzahl der Anhänger ist dabei nicht beschränkt, beispielsweise können landwirtschaftliche Traktoren mehr als nur einen Anhänger ziehen. Als Zugfahrzeuge kommen insbesondere Nutzfahrzeuge und Traktoren in Frage.

Üblicherweise wird bei einer Betätigung der Reibungsbremsanlage des Zugfahrzeugs die Anhängerbremsanlage des Anhängers mitbetätigt bzw. aktiviert oder zugespannt. Bei elektro-pneumatischen Bremsanlagen in Zugfahrzeug und Anhänger wird dabei eine Bremsanforderung beispielsweise vom Fahrer oder von einem Fahrerassistenzsystem (ESP, RSP, ACC) als elektrisches und parallel auch als pneumatisches Bremsanforderungssignal erzeugt und in Druckregelmodule der Reibungsbremsanlage des Zugfahrzeugs eingesteuert, um abhängig von der Bremsanforderung einen Bremsdruck zu erzeugen und einzuregeln. Parallel hierzu wird das elektrische und auch das pneumatische Bremsanforderungssignal in ein zugfahrzeugseitiges Anhängerbremsmodul eingesteuert, welches dann einerseits ein elektrisches Bremssignal und andererseits ein pneumatisches Bremssignal in einen Kupplungskopf "Bremse" für den Anhänger aussteuert. Dabei werden das Zugfahrzeug und der wenigstens eine Anhänger mehr oder weniger gleich stark verzögert.

Die Bremsabstimmung zwischen Zugfahrzeug und Anhänger ist in der Norm ECE R 13 geregelt. Diese enthält sogenannte Kompatibilitätsbänder, welche ein Verhältnis zwischen der Abbremsung "z" und dem Druck am Kupplungskopf "Bremse" des Zugfahrzeugs festlegen. Durch technische Defekte oder falscher Zugabstimmung kann es passieren, dass die tatsächliche Abbremsung z nicht der geforderten Abbremsung in den Kompatibilitätsbändern entspricht.

Dabei stellt ein auf das Zugfahrzeug aufschiebender Anhänger generell eine Gefahrensituation dar, als es dabei zum Einknicken der Zugfahrzeug-Anhängerkombination vor allem bei Kurvenfahrten kommen kann.

Um diesem Problem zu begegnen, kann im Rahmen einer relativ aufwändigen und beispielsweise in der DE 42 43 245 A1 oder in WO 2007/008150 A1 beschriebenen Koppelkraftregelung die Koppelkraft zwischen dem Zugfahrzeug und dem Anhänger sensiert und auf eine Soll-Koppelkraft eingeregelt werden.

Weiterhin sind sog. Streckbremsen aus dem Stand der Technik, z.B. aus DE 10 2007 023 345 A1 bekannt, bei denen der Fahrer durch manuellen Eingriff ausschließlich die Anhängerbremsanlage aktiviert, um bei aufschiebendem Anhänger bzw. bei einknickender Zugfahrzeug-Anhängerkombination die Letztgenannte zu strecken.

Weiterhin sind mechanische Auflaufbremsen beispielsweise für PKW-Anhänger oder für landwirtschaftliche Anhängern bis max. 8t Gesamtgewicht bei einer Höchstgeschwindigkeit von 40 km/h bekannt. Dabei wird die auf das Zugfahrzeug wirkende Aufschiebekraft des Anhängers zum Einbremsen des Anhängers verwendet. Durch ein Schubrohr in der Deichsel wird die Aufschiebekraft mittels eines Gestänge/Seilzug direkt zur Radbremse des Anhängers umgeleitet. Die in der Anhängerbremse erzeugte Bremskraft ist dann proportional zur Aufschiebekraft.

Gemäß WO 2013/004314 A1 wird das Bremsen des Anhängers unter der Annahme gesteuert, dass die Verzögerung der Zugfahrzeug-Anhängerkombination gleich der Verzögerung des Zugfahrzeugs alleine ist. Hierzu werden jedoch die Getriebeübersetzung und das Schleppmoment des Motors repräsentierende Signale benötigt, alternativ die Koppelkräfte. Folglich müssen hierzu zusätzliche Sensoren vorgesehen werden, was neben den Herstellkosten auch den Verkabelungsaufwand erhöht.

In DE 10 2009 050 793 A1 wird abhängig von Sensorsignalen von Sensoren wie einem Beschleunigungssensor über ein Hilfsdruckbremsventil in jedem Fall ein Bremsdruck für den Anhänger erzeugt. Dieser Bremsdruck wird dann einem Bremsdruck überlagert, welcher aus einer Betätigung des Bremspedals resultiert. Offen bleibt dabei wie die beiden Bremsdrücke aufeinander abgestimmt werden.

Nicht zuletzt sind für elektrische, elektro-pneumatische und elektro-hydraulische Bremssysteme von Zugfahrzeug-Anhänger-Kombinationen Fahrdynamikregelsysteme bekannt, beispielsweise in Form von ESP (Elektronisches Stabilitäts-Programm) oder RSP (Roll Stability Program), bei denen die Fahrzeugbewegung mittels einer Sensorik (Beschleunigungssensoren, Gierratensensoren) überwacht und die Zugfahrzeug-Anhänger-Kombinationen gegebenenfalls eingebremst wird. Solche Systeme können jedoch nicht ein Aufschieben des Anhängers auf das Zugfahrzeug erkennen und geeignete Gegenmaßnahmen ausführen.

Außer bei einem gemeinsamen Abbremsen von Zugfahrzeug und Anhänger kann es aber auch zu Schubkräften im Koppelpunkt (bei mehreren Anhängern in den Koppelpunkten) kommen, wenn bei nicht betätigter Reibungsbremsanlage des Zugfahrzeugs bzw. des Anhängers das Zugfahrzeug stärker als der Anhänger verzögert wird und der Anhänger somit auf das Zugfahrzeug aufschiebt.

Dies ist beispielsweise der Fall, wenn das Zugfahrzeug aufgrund eines Lösens des Gaspedals und der dann eintretenden Bremswirkung im Antriebsstrang durch Motorschleppmomente verzögert, ohne dass dabei die Reibungsbremsanlage des Zugfahrzeugs und damit auch die Anhängerbremsanlage aktiviert wird.

Ein weiterer solcher Fall kann dann gegeben sein, wenn das Zugfahrzeug aufgrund eines automatisierten Getriebes (z.B. CVT, Continously Variable Transmission) verzögert wird, ohne dass dabei die Reibungsbremse des Zugfahrzeugs und des Anhängers betätigt wird. Dies gilt gleichermaßen für PKW, Nutzfahrzeuge und Traktoren. Beispielsweise können Traktoren mit CVT eine Verzögerung von über 3 m/s² erreichen, ohne dass dabei die Reibungsbremsen aktiviert worden sind. Dies entspricht bereits etwa 50% der Verzögerung, die bei einer Vollbremsung mit den Reibungsbremsen erreicht werden kann.

Nicht zuletzt kann es auch zu einem Auflaufen des Anhängers auf das Zugfahrzeug bei nicht betätigter Reibungsbremse kommen, wenn das Zugfahrzeug mittels einer Dauerbremse, beispielsweise in Form eines Retarders oder einer Auspuffklappenbremse verzögert wird.

Der Erfindung liegt demgegenüber die Aufgabe zugrunde, ein Verfahren und eine Vorrichtung zur Abbremsung wenigstens eines Anhängers einer Zugfahrzeug-Anhängerkombination zur Verfügung zu stellen, welche auf möglichst einfache Weise die Fahrsicherheit verbessert.

Diese Aufgabe wird erfindungsgemäß durch die Merkmale der Ansprüche 1 und 4 gelöst.

### Offenbarung der Erfindung

Die Erfindung basiert darauf, dass eine bevorzugt anhängerseitige elektronische Überwachungs- und Steuereinrichtung eine einen vorgegebenen Grenzwert überschreitende Verzögerung des wenigstens einen Anhängers sowie eine gleichzeitig nicht betätigte Reibungsbremsanlage des Zugfahrzeugs erkennt und dann den wenigstens einen Anhänger automatisch, d.h. ohne ein über das Zugfahrzeug herangeführtes Bremsanforderungssignal einbremst.

Der vorgegebene Grenzwert für die Verzögerung beträgt vorzugsweise etwa 1 m/s² oder 0,8 m/s².

Damit werden die im Hinblick auf die Fahrsicherheit kritischen Fälle erfasst, in denen der wenigstens eine Anhänger aufgrund einer Verzögerung des Zugfahrzeugs, welche nicht auf ein Zuspannen der Reibungsbremsen des Zugfahrzeugs zurückzuführen ist, auf das Zugfahrzeug aufläuft. In diesen Fällen wird dann der wenigstens eine Anhänger automatisch eingebremst, um die Auflaufkräfte zu reduzieren bzw. zu eliminieren.

Im Einzelnen betrifft die Erfindung ein Verfahren zur automatischen Abbremsung wenigstens eines Anhängers einer Zugfahrzeug-Anhängerkombination, wobei das Zugfahrzeug als Betriebsbremsanlage eine Reibungsbremse, nämlich eine elektro-pneumatische Reibungsbremsanlage in Form eines elektronisch geregelten Bremssystems (EBS) und der Anhänger eine elektro-pneumatische Betriebsbremsanlage in Form eines elektronisch geregelten Bremssystems (TEBS) aufweist, wobei das Verfahren wenigstens folgende Schritte aufweist:
a) Überwachen des wenigstens einen Anhängers mittels einer elektronischen Überwachungs- und Steuereinrichtung dahingehend, ob der wenigstens eine Anhänger in Fahrtrichtung verzögert wird,
b) Überwachen der Reibungsbremsanlage des Zugfahrzeugs mittels der elektronischen Überwachungs- und Steuereinrichtung dahingehend, ob in die Reibungsbremse des Zugfahrzeugs ein Bremsanforderungssignal aufgrund einer Bremsanforderung eingesteuert wird, wobei
c) falls kein Bremsanforderungssignal in die Reibungsbremsanlage des Zugfahrzeugs eingesteuert wird und falls die erfasste Verzögerung des wenigstens einen Anhängers einen vorgegebenen Grenzwert überschreitet eine Anhängerbremse mittels der elektronischen Überwachungs- und Steuereinrichtung automatisch aktiviert wird, und wobei
d) die Überwachung des wenigstens einen Anhängers dahingehend, ob er verzögert wird durch eine Überwachung der Signale von Raddrehzahlsensoren des wenigstens einen Anhängers und/oder durch eine Überwachung eines in Fahrtrichtung sensierenden Längsbeschleunigungssensors des Anhängers erfolgt, und wobei
e) die Überwachung der Reibungsbremse des Zugfahrzeugs dahingehend, ob in eine Steuerung der Reibungsbremsanlage des Zugfahrzeugs aufgrund einer Bremsanforderung ein Bremsanforderungssignal eingesteuert wird mittels einer Überwachung des Bremsdrucks des wenigstens einen Anhängers erfolgt, und/oder wobei
f) die Überwachung der Reibungsbremse des Zugfahrzeugs dahingehend, ob in eine Steuerung der Reibungsbremsanlage des Zugfahrzeugs aufgrund einer Bremsanforderung ein Bremsanforderungssignal eingesteuert wird mittels einer Überwachung eines vom Zugfahrzeug in den Anhänger geführten elektrischen Bremssteuersignals erfolgt.

In analoger Weise betrifft die Erfindung auch eine Vorrichtung zur automatischen Abbremsung wenigstens eines Anhängers einer Zugfahrzeug-Anhängerkombination, wobei das Zugfahrzeug als Betriebsbremsanlage eine Reibungsbremse, nämlich eine elektro-pneumatische Reibungsbremsanlage in Form eines elektronisch geregelten Bremssystems (EBS) und der Anhänger eine elektro-pneumatische Betriebsbremsanlage in Form eines elektronisch geregelten Bremssystems (TEBS) aufweist, beinhaltend
a) eine elektronische Überwachungs- und Steuereinrichtung, welche den wenigstens einen Anhängers dahingehend überwacht, ob der Anhänger in Fahrtrichtung verzögert wird, wobei
b) die elektronische Überwachungs- und Steuereinrichtung weiterhin ausgebildet ist, dass sie die Reibungsbremse des Zugfahrzeugs dahingehend überwacht, ob in die Reibungsbremse des Zugfahrzeugs aufgrund einer Bremsanforderung ein Bremsanforderungssignal eingesteuert wird, und wobei
c) die elektronische Überwachungs- und Steuereinrichtung ausgebildet ist, dass sie, falls kein Bremsanforderungssignal in die Reibungsbremse des Zugfahrzeugs eingesteuert wird und falls die erfasste Verzögerung des wenigstens einen Anhängers einen vorgegebenen Grenzwert überschreitet eine Anhängerbremse automatisch aktiviert, wobei
d) zur Überwachung des wenigstens einen Anhängers, ob er in Fahrtrichtung verzögert wird, die elektronische Überwachungs- und Steuereinrichtung Signale von Raddrehzahlsensoren des Anhängers und/oder die Signale eines in Fahrtrichtung sensierenden Längsbeschleunigungssensors des Anhängers überwacht, und wobei
e) zur Überwachung der Reibungsbremse des Zugfahrzeugs, ob in diese aufgrund einer Bremsanforderung ein Bremsanforderungssignal eingesteuert wird, die elektronische Überwachungs- und Steuereinrichtung den Bremsdruck des wenigstens einen Anhängers überwacht, und/oder wobei
f) zur Überwachung der Reibungsbremse des Zugfahrzeugs, ob in diese aufgrund einer Bremsanforderung ein Bremsanforderungssignal eingesteuert wird, die elektronische Überwachungs- und Steuereinrichtung ein vom Zugfahrzeug in den Anhänger geführtes elektrisches Bremssteuersignal überwacht.

Der Vorteil der Verwendung einer solchen elektronischen Überwachungs- und Steuereinrichtung liegt darin, dass eine Verknüpfung zwischen den Eingangsgrößen wie der Größen, welche zur Überwachung der Verzögerung des Anhängers und zur Überwachung der Betätigung der Reibungsbremsen des Zugfahrzeugs herangezogen werden und der Ausgangsgröße in Form des Betätigungssignals der Anhängerbremsen flexibel gestaltet werden kann. Weiterhin kann auch die zeitliche Wirkung und die Höhe der Bremskraft bei der automatischen Betätigung der Anhängerbremsen je nach Anforderung flexibel angepasst werden. Dies ist insbesondere im Hinblick auf die demgegenüber starre Verknüpfung bei einer eingangs genannten mechanischen Auflaufbremse von Vorteil.

Besonders bevorzugt erfolgt die Überwachung des wenigstens einen Anhängers dahingehend, ob er verzögert wird, durch eine Überwachung der Signale von Raddrehzahlsensoren des Anhängers und/oder durch eine Überwachung eines in Fahrtrichtung sensierenden Beschleunigungssensors des Anhängers. Dies ist insofern vorteilhaft, als solche Raddrehzahlsensoren bzw. Raddrehzahlsignale bereits im Rahmen von ABS beim Anhänger ohnehin vorhanden sind.

In ebenso vorteilhafter Weise erfolgt die Überwachung der Reibungsbremsanlage des Zugfahrzeugs dahingehend, ob in eine Steuerung der Reibungsbremsanlage des Zugfahrzeugs aufgrund einer Bremsanforderung ein Bremsanforderungssignal eingesteuert wird mittels einer Überwachung des Bremsdrucks des Anhängers, insbesondere an dem Kupplungskopf "Bremse" des Anhängers.

Alternativ oder zusätzlich kann die Überwachung der Reibungsbremse des Zugfahrzeugs dahingehend, ob in eine Steuerung der Reibungsbremsanlage des Zugfahrzeugs aufgrund einer Bremsanforderung ein Bremsanforderungssignal eingesteuert wird, mittels einer Überwachung eines vom Zugfahrzeug in den Anhänger geführten elektrischen Bremssteuersignals erfolgen. Denn bei elektro-pneumatischen Bremsanlagen von Zugfahrzeug-Anhängerkombinationen werden bei einer Betriebsbremsung mit der Reibungsbremse neben dem Bremssteuerdruck auch ein elektrisches Bremssteuersignal vom Zugfahrzeug in den Anhänger geführt. Dieses elektrische Bremssteuersignal ist bei elektronischen Anhängerbremsen (EBS) somit ebenfalls bereits vorhanden und muss dann lediglich überwacht werden.

In beiden Fällen handelt es sich bei den überwachten Signalen, nämlich den Signalen der Raddrehzahlsensoren bzw. der Beschleunigungssensoren des Anhängers bzw. den Drucksignalen am Kupplungskopf "Bremse" bzw. dem elektrischen Bremssteuersignal um Signale, welche bei Anhängern mit einem elektronischen Bremssystem (EBS) ohnehin bereits zur Verfügung stehen. Deshalb ist es vorteilhaft, wenn die elektronische Überwachungs- und Steuereinrichtung bevorzugt anhängerseitig angeordnet ist, um einen zusätzlichen Datenverkehr zwischen dem Zugfahrzeug und dem Anhänger sowie eine hierfür notwendige Verkabelung zu vermeiden.

Durch die in den Unteransprüchen aufgeführten Maßnahmen sind vorteilhafte Weiterbildungen und Verbesserungen der in Anspruch 1 angegebenen Erfindung möglich.

Die Überwachungs- und Steuereinrichtung kann dann insbesondere in einem bereits vorhandenen elektronischen Steuergerät des elektronisch geregelten Bremssystems des Anhängers (TEBS) integriert sein. Eine Anpassung des Zugfahrzeugs an das erfindungsgemäße Verfahren bzw. an die erfindungsgemäße Vorrichtung ist dann nicht notwendig.

Das automatische Aktivieren der Anhängerbremsanlage kann derart erfolgen, dass die dabei erzeugte Bremskraft eine kontinuierliche Bremskraft oder eine gepulste Bremskraft ist.

Im Falle der Erzeugung einer gepulsten Bremskraft ist wenigstens einer der folgenden Parameter vorzugsweise variierbar: Die maximal wirkende Bremskraft, die minimale wirkende Bremskraft, die Aufbauzeit zum Aufbau der maximal
wirkenden Bremskraft, die Haltezeit der maximal wirkenden Bremskraft, die Abbauzeit zum Abbau der maximal wirkenden Bremskraft sowie die bremskraftlose Zeit, während der keine Bremskraft wirkt. Ebenso ist es denkbar und sinnvoll, dass die Anhängerbremsen erst nach einer parametrierbaren Totzeit (beispielsweise nach 2 Sekunden) nach dem Ausbleiben eines Bremsanforderungssignals vom Zugfahrzeug automatisch aktiviert werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

In der Zeichnung zeigt
- Fig.1: einen schematischen Schaltplan einer bevorzugten Ausführungsform einer Vorrichtung zur Abbremsung wenigstens eines Anhängers einer Zugfahrzeug-Anhängerkombination;

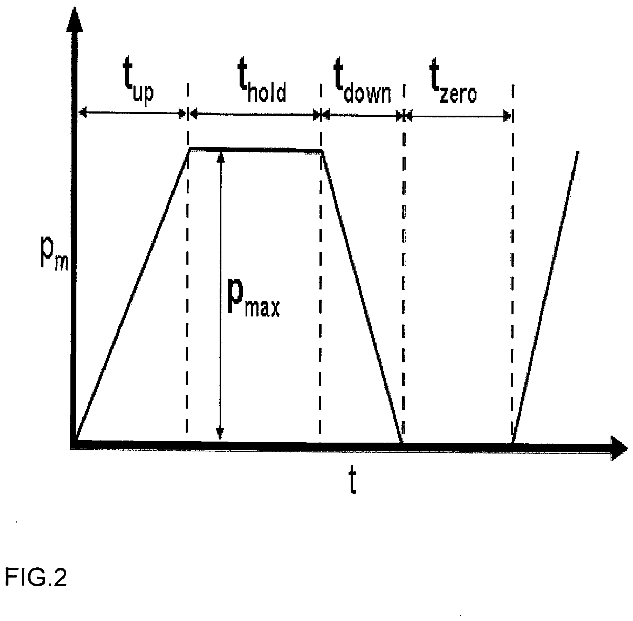

- Fig.2: ein Bremsdruck-Zeit-Diagramm eines Druckpulses, wie er bei einer automatischen Einbremsung des Anhängers für die Anhängerbremsen erzeugt wird.

### Beschreibung der Ausführungsbeispiele

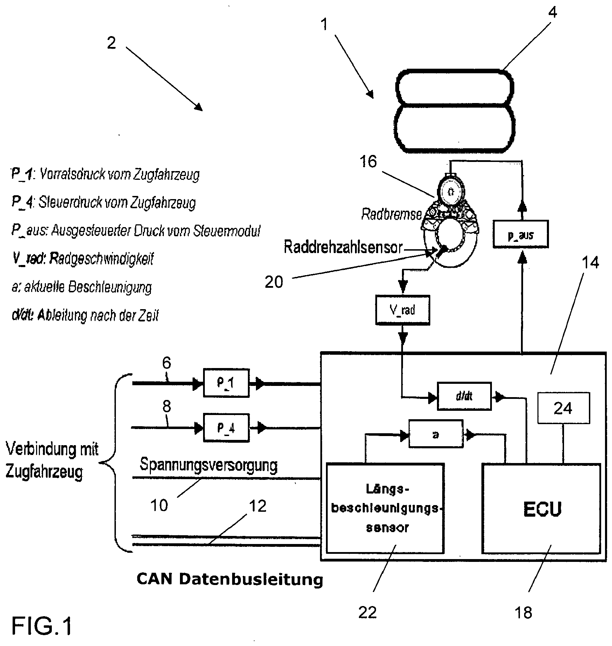

In Fig.1 ist schematisch eine bevorzugte Ausführungsform einer Vorrichtung 1 zur Abbremsung eines Anhängers 2 einer Zugfahrzeug-Anhängerkombination gezeigt. Im vorliegenden Fall weist die Zugfahrzeug-Anhängerkombination lediglich einen Anhänger 2 auf, es können jedoch auch mehrere Anhänger am Zugfahrzeug angehängt sein. Von dem Anhänger 2 sind in Fig.1 lediglich die Bremsanlage sowie ein Rad 4 gezeigt.

Dabei weist das Zugfahrzeug als Betriebsbremsanlage beispielsweise eine elektro-pneumatische Reibungsbremsanlage in Form eines elektronisch geregelten Bremssystems (EBS; Electronic Brake System) sowie eine Dauerbremsanlage beispielsweise in Form eines Retarders auf. Der Anhänger 2 weist beispielsweise, aber nicht zwingend ebenfalls eine elektro-pneumatische Betriebsbremsanlage in Form eines elektronisch geregelten Bremssystems (TEBS; Trailer Electronic Brake System) auf.

Bei einem solchen elektronisch geregelten Bremssystems (EBS) sind achsweise oder radweise Druckregelmodule vorhanden, mit integrierten Drucksensoren zur Erfassung des Ist-Bremsdrucks und mit einer übergeordneten Steuerelektronik zum Abgleich der Ist-Bremsdrücke mit den Soll-Bremsdrücken gemäß der jeweiligen Bremsanforderung.

Das elektronisch geregelte Bremssystem (EBS) des Zugfahrzeugs wie auch des Anhängers kann eine Bremsschlupfregelung (ABS) beinhalten. Weiterhin kann beim Zugfahrzeug eine Antriebsschlupfregelung (ASR) vorhanden sein.

Die Bremsanlagen des Zugfahrzeugs und die Bremsanlage des Anhängers 2 sind, wie bei solchen elektro-pneumatischen Bremsanlagen üblich, mittels eines Kupplungskopfes "Vorrat" und mittels eines Kupplungskopfes "Bremse" miteinander gekoppelt. Dabei wird der vom Zugfahrzeug herangeführte Vorratsdruck P_1 in einer anhängerseitigen Vorratsdruckleitung 6 und der vom Zugfahrzeug herangeführte Steuerdruck P_4 in einer anhängerseitigen Steuerdruckleitung 8 im Anhänger geführt. Weiterhin führen eine Spannungsversorgungsleitung 10 sowie eine CAN-Datenbusleitung 12 von den entsprechenden elektrischen Koppelstellen zwischen dem Zugfahrzeug und dem Anhänger 2 in den Anhänger 2.

Bei einem normalen Betriebsbremsvorgang aufgrund eines Bremsanforderungssignals für die Reibungsbremsen der Zugfahrzeug-Anhängerkombination, gleich ob es vom Fahrer des Zugfahrzeugs, von einem Fahrdynamikregelsystem (z.B. ESP) oder von einem Fahrassistenzsystem (z.B. ACC) erzeugt wurde, wird zum einen über den Kupplungskopf "Bremse" ein Steuerdruck P_4 und über die CAN-Datenbusleitung 12 ein elektrisches Bremssteuersignal in ein Steuermodul 14 des elektronisch geregelten Bremssystems des Anhängers (TEBS) eingesteuert, um auf der Basis dieser Steuersignale einen Bremsdruck p_aus für die Radbremsen 16 des Anhängers 2 zu erzeugen. Der Steuerdruck P_4 in der Steuerdruckleitung 8 bzw. vom Kupplungskopf "Bremse" stammt dabei von einem bekannten zugfahrzeugseitigen Anhängersteuermodul und das elektrische Bremssteuersignal von einem zugfahrzeugseitigen Steuergerät des elektronisch geregelten Bremssystems des Zugfahrzeugs (EBS).

Das Steuermodul 14 des elektronisch geregelten Bremssystems des Anhängers (TEBS) beinhaltet ein elektronisches Steuergerät ECU, in welchem die Steuer- und Regelroutinen für die Anhängerbremsanlage ablaufen und gespeichert sind.

Die Vorrichtung 1 zur Abbremsung des Anhängers der Zugfahrzeug-Anhängerkombination beinhaltet eine elektronische Überwachungs- und Steuereinrichtung 18. Diese elektronische Überwachungs- und Steuereinrichtung 18 ist hier bevorzugt in das elektronische Steuergerät ECU des elektronisch geregelten Bremssystems des Anhängers (TEBS) integriert.

Diese elektronische Überwachungs- und Steuereinrichtung 18 überwacht den Anhänger 2 dahingehend, ob der Anhänger 2 in Fahrtrichtung verzögert wird. Diese Überwachung erfolgt bevorzugt auf der Basis der Signale von Raddrehzahlsensoren 20 des Anhängers 2 und/oder auf der Basis der Signale eines in Fahrtrichtung sensierenden Längsbeschleunigungssensors 22 des Anhängers. In Fig.1 werden sowohl das Signal a eines Längsbeschleunigungssensors 22 als auch das nach der Zeit t abgeleitete Signal dV_{rad}/dt der Raddrehzahlsensoren 20 zur Überwachung herangezogen.

Der Längsbeschleunigungssensor 22 ist beispielsweise in die elektronische Überwachungs- und Steuereinrichtung 18 integriert bzw. auf deren Platine installiert, obwohl er in Fig.1 lediglich aus Übersichtlichkeitsgründen neben der elektronischen Überwachungs- und Steuereinrichtung 18 gezeigt ist. Bei den durch die Raddrehzahlsensoren 20 gelieferten Geschwindigkeitssignalen V_rad wird die Verzögerung des Anhängers 2 aus der Differenzierung dieser Geschwindigkeitssignale V_rad nach der Zeit t gewonnen.

Weiterhin ist die elektronische Überwachungs- und Steuereinrichtung 18 ausgebildet, dass sie die Reibungsbremsanlage des Zugfahrzeugs dahingehend überwacht, ob in die Reibungsbremsanlage des Zugfahrzeugs aufgrund einer Bremsanforderung ein Bremsanforderungssignal eingesteuert wird. Ein solches Bremsanforderungssignal kann aufgrund einer Bremsanforderung durch den Fahrer durch Betätigung eines Fußbremspedals als auch durch ein Fahrdynamiksystem wie ESP oder RSP wie auch durch ein Fahrassistenzsystem (ACC, Adaptive Cruise Control) erzeugt worden sein.

Die Überwachung der Bremsanforderung für die Reibungsbremse des Zugfahrzeugs erfolgt vorteilhaft durch eine Überwachung des Steuerdrucks am anhängerseitigen Kupplungskopf "Bremse", weil über diesen Kupplungskopf das hier pneumatische Steuersignal für die Anhängerbremse in den Anhänger 2 eingesteuert wird. Dieser Steuerdruck wird nur dann erzeugt, wenn die Reibungsbremse des Zugfahrzeugs betätigt wurde. Hierzu kann beispielsweise ein Drucksensor 24 in der Steuerdruckleitung 8 zwischen dem anhängerseitigen Kupplungskopf "Bremse" und dem anhängerseitigen Steuermodul 14 angeordnet sein. Dieser Drucksensor 24 meldet dann den in der Steuerdruckleitung 8 herrschenden Steuerdruck in die elektronische Überwachungs- und Steuereinrichtung 18. Alternativ oder zusätzlich kann auch das elektrische Steuersignal in der CAN-Datenbusleitung 12 dahingehend überwacht werden, ob die Reibungsbremsen des Zugfahrzeugs betätigt wurden.

Die beiden Signale "Druck am Kupplungskopf Bremse" bzw. "elektrisches Steuersignal in der CAN-Datenbusleitung" und "Verzögerung des Anhängers" werden über elektrische Leitungen in die elektronische Überwachungs- und Steuereinrichtung 18 eingesteuert. Die elektronische Überwachungs- und Steuereinrichtung 18 weist eine Auswerteroutine auf hinsichtlich der ihr zugeführten Signale "Druck am Kupplungskopf Bremse" und "Verzögerung des Anhängers" auf. Die Auswerteroutine ist ausgebildet, dass sie, falls kein Bremsanforderungssignal in die Reibungsbremsanlage des Zugfahrzeugs eingesteuert wird und falls die erfasste Verzögerung des Anhängers 2 einen vorgegebenen Grenzwert überschreitet, die Radbremsen 16 des Anhängers 2 automatisch aktiviert oder zugespannt werden.

Der vorgegebene Grenzwert für die Verzögerung beträgt vorzugsweise etwa 1 m/s² oder 0,8 m/s², um nicht bereits bei geringen Auflaufkräften die automatische Betätigung der Radbremsen 16 des Anhängers 2 auszulösen. Der Verzögerungsgrenzwert ist aber parametrierbar und kann vom Fachmann bedarfsweise festgelegt werden.

Wie bereits eingangs beschrieben, liegt kein Bremsdruck am Kupplungskopf "Bremse" bzw. in der Steuerdruckleitung 8 vor und die Verzögerung des Anhängers 2 überschreitet in der Regel den oben angegebenen Grenzwert, wenn das Zugfahrzeug aufgrund eines Lösens des Gaspedals und der dann eintretenden Bremswirkung im Antriebsstrang durch Motorschleppmomente verzögert, ohne dass dabei die Reibungsbremsanlage des Zugfahrzeugs und damit auch die Anhängerbremsanlage aktiviert wird.

Dies kann auch der Fall sein, wenn das Zugfahrzeug aufgrund eines automatisierten Getriebes verzögert wird, ohne dass dabei die Reibungsbremse des Zugfahrzeugs und des Anhängers betätigt wird. Nicht zuletzt kann es auch zu einem Auflaufen des Anhängers 2 auf das Zugfahrzeug bei nicht betätigter Reibungsbremse kommen, wenn das Zugfahrzeug mittels einer Dauerbremse, beispielsweise in Form eines Retarders oder einer Auspuffklappenbremse verzögert wird.

Das automatische Aktivieren der Radbremsen 16 des Anhängers durch die elektronische Überwachungs- und Steuereinrichtung kann dann derart erfolgen, dass die dabei erzeugte Bremskraft eine kontinuierliche Bremskraft oder eine gepulste Bremskraft ist.

Bei Anhängern ohne ABS ist eine gepulste Bremskraft vorteilhaft. In Fig.3 ist in einem Bremsdruck-Zeitdiagramm der zeitliche Verlauf des Bremsdrucks pₘ in Abhängigkeit von der Zeit t bei einem Druckpuls dargestellt. Demnach kann ein solcher Druckpuls charakterisiert werden durch einen maximal wirkenden Bremsdruck pₘₐₓ, einen minimale wirkenden Bremsdruck, welcher hier beispielsweise gleich Null ist, eine Aufbauzeit tᵤₚ zum Aufbau des maximal wirkenden Bremsdrucks pₘₐₓ, eine Haltezeit t_{hold} des maximal wirkenden Bremsdrucks pₘₐₓ, eine Abbauzeit t_{down} zum Abbau des maximal wirkenden Bremsdrucks pₘₐₓ sowie durch eine bremsdrucklose Zeit t_{zero}, während der kein Bremsdruck wirkt. Nach Ablauf der bremsdrucklosen Zeit t_{zero} wird dann ein erneuter Druckpuls gesetzt. Für den gepulsten Bremsdruck bzw. für die daraus resultierende gepulste Bremskraft kann dann wenigstens einer dieser Parameter variiert werden.

Dabei ist klar, dass der Druckpuls von Fig.3 im Zusammenhang mit einer druckmittelbetätigten Bremsanlage des Anhängers 2 erzeugt wird. Diese kann dann eine rein pneumatische, rein hydraulische, elektro-pneumatische oder elektro-hydraulische Bremsanlage sein.

Gemäß einer weiteren Ausführungsform kann der Anhänger 2 auch über eine rein elektrische Bremsanlage verfügen, bei der die Bremsanforderung vom Zugfahrzeug über eine elektrische Datenverbindung in den Anhänger eingesteuert wird. Die Bremsaktuatoren des Anhängers 2 werden dann mit elektrischer Energie zugespannt. Auch in diesem Fall werden die dann elektrischen Bremsanforderungssignale des Zugfahrzeugs sowie die Verzögerung des Anhängers überwacht sowie bei einem nach obigen Bedingungen erfassten Auflaufen des Anhängers 2 auf das Zugfahrzeug durch die elektronische Überwachungs- und Steuereinrichtung die dann elektrischen Radbremsen 16 des Anhängers automatisch zugespannt.

### Bezugszeichenliste

- 1: Vorrichtung
- 2: Anhänger
- 4: Anhängerrad
- 6: Vorratsdruckleitung
- 8: Steuerdruckleitung
- 10: Spannungsversorgungsleitung
- 12: CAN-Datenbusleitung
- 14: Steuermodul
- 16: Radbremsen
- 18: Überwachungs- und Steuereinrichtung
- 20: Raddrehzahlsensor
- 22: Längsbeschleunigungssensor
- 24: Drucksensor

## Patentansprüche

1. Verfahren zur automatischen Abbremsung wenigstens eines Anhängers (2) einer Zugfahrzeug-Anhängerkombination, wobei das Zugfahrzeug als Betriebsbremsanlage eine Reibungsbremse, nämlich eine elektro-pneumatische Reibungsbremsanlage in Form eines elektronisch geregelten Bremssystems (EBS) und der Anhänger eine elektro-pneumatische Betriebsbremsanlage in Form eines elektronisch geregelten Bremssystems (TEBS) aufweist, wobei das Verfahren wenigstens folgende Schritte aufweist:
a) Überwachen des wenigstens einen Anhängers (2) mittels einer elektronischen Überwachungs- und Steuereinrichtung (18) dahingehend, ob der wenigstens eine Anhänger (2) in Fahrtrichtung verzögert wird,
b) Überwachen der Reibungsbremsanlage des Zugfahrzeugs mittels der elektronischen Überwachungs- und Steuereinrichtung (18) dahingehend, ob in die Reibungsbremse des Zugfahrzeugs ein Bremsanforderungssignal aufgrund einer Bremsanforderung eingesteuert wird, wobei
c) falls kein Bremsanforderungssignal in die Reibungsbremsanlage des Zugfahrzeugs eingesteuert wird und falls die erfasste Verzögerung (dV_rad/dt, a) des wenigstens einen Anhängers (2) einen vorgegebenen Grenzwert überschreitet eine Anhängerbremse (16) mittels der elektronischen Überwachungs- und Steuereinrichtung (18) automatisch aktiviert wird, und wobei
d) die Überwachung des wenigstens einen Anhängers (2) dahingehend, ob er verzögert wird durch eine Überwachung der Signale von Raddrehzahlsensoren (20) des wenigstens einen Anhängers (2) und/oder durch eine Überwachung eines in Fahrtrichtung sensierenden Längsbeschleunigungssensors (22) des Anhängers (2) erfolgt, und wobei
e) die Überwachung der Reibungsbremse des Zugfahrzeugs dahingehend, ob in eine Steuerung der Reibungsbremsanlage des Zugfahrzeugs aufgrund einer Bremsanforderung ein Bremsanforderungssignal eingesteuert wird mittels einer Überwachung des Bremsdrucks des wenigstens einen Anhängers (2) erfolgt, und/oder wobei
f) die Überwachung der Reibungsbremse des Zugfahrzeugs dahingehend, ob in eine Steuerung der Reibungsbremsanlage des Zugfahrzeugs aufgrund einer Bremsanforderung ein Bremsanforderungssignal eingesteuert wird mittels einer Überwachung eines vom Zugfahrzeug in den Anhänger (2) geführten elektrischen Bremssteuersignals erfolgt.

2. Verfahren nach einem der vorhergehenden Ansprüche, **dadurch gekennzeichnet, dass** das automatische Aktivieren der Anhängerbremse (16) des wenigstens einen Anhängers (2) derart erfolgt, dass die dabei erzeugte Bremskraft eine kontinuierliche Bremskraft oder eine gepulste Bremskraft ist.

3. Verfahren nach Anspruch 2, **dadurch gekennzeichnet, dass** im Falle der Erzeugung einer gepulsten Bremskraft wenigstens einer der folgenden Parameter variierbar ist: Die maximal wirkende Bremskraft (pₘₐₓ), die minimale wirkende Bremskraft, die Aufbauzeit (tᵤₚ) zum Aufbau der maximal wirkenden Bremskraft (pₘₐₓ), die Haltezeit (t_{hold}) der maximal wirkenden Bremskraft (pₘₐₓ), die Abbauzeit (t_{down}) zum Abbau der maximal wirkenden Bremskraft (pₘₐₓ), die bremskraftlose Zeit (t_{zero}), während der keine Bremskraft wirkt.

4. Vorrichtung zur automatischen Abbremsung wenigstens eines Anhängers (2) einer Zugfahrzeug-Anhängerkombination, wobei das Zugfahrzeug als Betriebsbremsanlage eine Reibungsbremse, nämlich eine elektro-pneumatische Reibungsbremsanlage in Form eines elektronisch geregelten Bremssystems (EBS) und der Anhänger eine elektro-pneumatische Betriebsbremsanlage in Form eines elektronisch geregelten Bremssystems (TEBS) aufweist, beinhaltend
a) eine elektronische Überwachungs- und Steuereinrichtung (18), welche den wenigstens einen Anhängers (2) dahingehend überwacht, ob der Anhänger (2) in Fahrtrichtung verzögert wird, wobei
b) die elektronische Überwachungs- und Steuereinrichtung (18) weiterhin ausgebildet ist, dass sie die Reibungsbremse des Zugfahrzeugs dahingehend überwacht, ob in die Reibungsbremse des Zugfahrzeugs aufgrund einer Bremsanforderung ein Bremsanforderungssignal eingesteuert wird, und wobei
c) die elektronische Überwachungs- und Steuereinrichtung ausgebildet ist, dass sie, falls kein Bremsanforderungssignal in die Reibungsbremse des Zugfahrzeugs eingesteuert wird und falls die erfasste Verzögerung (dV_rad/dt, a) des wenigstens einen Anhängers (2) einen vorgegebenen Grenzwert überschreitet eine Anhängerbremse automatisch aktiviert, wobei
d) zur Überwachung des wenigstens einen Anhängers (2), ob er in Fahrtrichtung verzögert wird, die elektronische Überwachungs- und Steuereinrichtung (18) Signale von Raddrehzahlsensoren (20) des Anhängers (2) und/oder die Signale eines in Fahrtrichtung sensierenden Längsbeschleunigungssensors (22) des Anhängers (2) überwacht, und wobei
e) zur Überwachung der Reibungsbremse des Zugfahrzeugs, ob in diese aufgrund einer Bremsanforderung ein Bremsanforderungssignal eingesteuert wird, die elektronische Überwachungs- und Steuereinrichtung (18) den Bremsdruck des wenigstens einen Anhängers (2) überwacht, und/oder wobei
f) zur Überwachung der Reibungsbremse des Zugfahrzeugs, ob in diese aufgrund einer Bremsanforderung ein Bremsanforderungssignal eingesteuert wird, die elektronische Überwachungs- und Steuereinrichtung (18) ein vom Zugfahrzeug in den Anhänger (2) geführtes elektrisches Bremssteuersignal überwacht.

5. Vorrichtung nach Anspruch 4, **dadurch gekennzeichnet, dass** die elektronische Überwachungs- und Steuereinrichtung (18) die Anhängerbremse (16) derart aktiviert, dass die dabei erzeugte Bremskraft eine kontinuierliche Bremskraft oder eine gepulste Bremskraft ist.

6. Vorrichtung nach Anspruch 5, **dadurch gekennzeichnet, dass** im Falle der Erzeugung einer gepulsten Bremskraft wenigstens einer der folgenden Parameter variierbar ist: Die maximal wirkende Bremskraft (pmax), die minimale wirkende Bremskraft, die Aufbauzeit (tᵤₚ) zum Aufbau der maximal wirkenden Bremskraft (pₘₐₓ), die Haltezeit (t_{hold}) der maximal wirkenden Bremskraft (pₘₐₓ), die Abbauzeit (t_{down}) zum Abbau der maximal wirkenden Bremskraft (pₘₐₓ), die bremskraftlose Zeit (t_{zero}), während der keine Bremskraft wirkt.

7. Vorrichtung nach einem der Ansprüche 4 bis 6 , **dadurch gekennzeichnet, dass** der vorgegebene Grenzwert für die Verzögerung etwa 1 m/s² beträgt.

8. Vorrichtung nach einem der Ansprüche 4 bis 7, **dadurch gekennzeichnet, dass** die elektronische Überwachungs- und Steuereinrichtung (18) anhängerseitig angeordnet ist.

9. Vorrichtung nach Anspruch 8, **dadurch gekennzeichnet, dass** die elektronische Überwachungs- und Steuereinrichtung (18) in einem elektronischen Steuergerät (ECU) des elektronisch geregelten Bremssystems des Anhängers (TEBS) integriert ist.

## Claims

1. Method for automatically braking at least one trailer (2) of a towing vehicle / trailer combination, wherein the towing vehicle has, as a service brake system, a friction brake, namely an electropneumatic friction brake system in the form of an electronically controlled brake system (EBS), and the trailer has an electropneumatic service brake system in the form of an electronically controlled brake system (TEBS), the method comprising at least the following steps:
a) the monitoring of the at least one trailer (2) by means of an electronic monitoring and control device (18) as to whether the at least one trailer (2) is being decelerated in the direction of travel,
b) the monitoring of the friction brake system of the towing vehicle by means of the electronic monitoring and control device (18) as to whether a brake request signal is being fed into the friction brake of the towing vehicle as a result of a brake request, wherein
c) if no brake request signal is being fed into the friction brake system of the towing vehicle and if the detected deceleration (dV_rad/dt, a) of the at least one trailer (2) exceeds a preset limit value, a trailer brake (16) is activated automatically by means of the electronic monitoring and control device (18), and wherein
d) the at least one trailer (2) is monitored as to whether it is being decelerated by monitoring the signals of wheel speed sensors (20) of the at least one trailer (2) and/or by monitoring a longitudinal acceleration sensor (22) of the trailer (2) which senses in the direction of travel, and wherein
e) the friction brake of the towing vehicle is monitored as to whether a brake request signal is being fed into a control unit of the friction brake system of the towing vehicle as a result of a brake request by means of monitoring the brake pressure of the at least one trailer (2), and/or wherein
f) the friction brake of the towing vehicle is monitored as to whether a brake request signal is being fed into a control unit of the friction brake system of the towing vehicle as a result of a brake request by means of monitoring an electric brake control signal introduced into the trailer (2) by the towing vehicle.

2. Method according to any of the preceding claims, **characterised in that** the trailer brake (16) of the at least one trailer (2) is automatically activated in such a way that the braking force generated in this process is a continuous braking force or a pulsed braking force.

3. Method according to claim 2, **characterised in that,** if a pulsed braking force is generated, at least one of the following parameters can be varied: the maximum acting braking force (pₘₐₓ), the minimum acting braking force, the build-up time (tᵤₚ) for building up the maximum acting braking force (pₘₐₓ), the holding time (t_{hold}) of the maximum acting braking force (pₘₐₓ), the depletion time (t_{down}) of the maximum acting braking force (pₘₐₓ), the time without braking force (t_{zero}), in which no braking force acts.

4. Device for automatically braking at least one trailer (2) of a towing vehicle / trailer combination, wherein the towing vehicle has, as a service brake system, a friction brake, namely an electropneumatic friction brake system in the form of an electronically controlled brake system (EBS), and the trailer has an electropneumatic service brake system in the form of an electronically controlled brake system (TEBS), the device comprising:
a) an electronic monitoring and control device (18), which monitors the at least one trailer (2) as to whether the trailer (2) is being decelerated in the direction of travel, wherein
b) the electronic monitoring and control device (18) is furthermore designed such that it monitors the friction brake of the towing vehicle as to whether a brake request signal is being fed into the friction brake of the towing vehicle as a result of a brake request, and wherein
c) the electronic monitoring and control device is designed such that, if no brake request signal is being fed into the friction brake of the towing vehicle and if the detected deceleration (dV_rad/dt, a) of the at least one trailer (2) exceeds a preset limit value, a trailer brake is activated automatically, wherein
d) in order to monitor as to whether the at least one trailer (2) is being decelerated in the direction of travel, the electronic monitoring and control device (18) monitors signals of wheel speed sensors (20) of the trailer (2) and/or the signals of a longitudinal acceleration sensor (22) of the trailer (2) which senses in the direction of travel, and wherein
e) in order to monitor as to whether a brake request signal is being fed into the friction brake of the towing vehicle as a result of a brake request, the electronic monitoring and control device (18) monitors the brake pressure of the at least one trailer (2), and/or wherein
f) in order to monitor as to whether a brake request signal is being fed into the friction brake of the towing vehicle as a result of a brake request, the electronic monitoring and control device (18) monitors an electric brake control signal introduced into the trailer (2) by the towing vehicle.

5. Device according to claim 4, **characterised in that** the electronic monitoring and control device (18) activates the trailer brake (16) in such a way that the braking force generated in this process is a continuous braking force or a pulsed braking force.

6. Device according to claim 5, **characterised in that,** if a pulsed braking force is generated, at least one of the following parameters can be varied: the maximum acting braking force (pₘₐₓ), the minimum acting braking force, the build-up time (tᵤₚ) for building up the maximum acting braking force (pₘₐₓ), the holding time (t_{hold}) of the maximum acting braking force (pₘₐₓ), the depletion time (t_{down}) of the maximum acting braking force (pₘₐₓ), the time without braking force (t_{zero}), in which no braking force acts.

7. Device according to any of claims 4 to 6, **characterised in that** the preset limit value for the deceleration is approximately 1 m/s².

8. Device according to any of claims 4 to 7, **characterised in that** the electronic monitoring and control device (18) is located on the trailer.

9. Device according to claim 8, **characterised in that** the electronic monitoring and control device (18) is integrated into an electronic control unit (ECU) of the electronically controlled brake system (TEBS) of the trailer.

## Revendications

1. Procédé de freinage automatique d'au moins une remorque (2) d'une combinaison véhicule de traction-remorque, le véhicule de traction ayant comme système de frein de service un frein à friction, à savoir un système de frein à friction électropneumatique sous la forme d'un système (EBS) de frein régulé électroniquement et la remorque, un système de frein de service électropneumatique sous la forme d'un système (TEBS) de frein régulé électriquement, le procédé ayant au moins les stades suivants :
a) contrôle de la au moins une remorque (2) au moyen d'un dispositif (18) électronique de contrôle et de commande, pour savoir si la au moins une remorque (2) est décélérée dans le sens de la marche,
b) contrôle du système de frein à friction du véhicule de traction au moyen du dispositif (18) électronique de contrôle et de commande, pour savoir si, dans le frein à friction du véhicule de traction, un signal de demande de freinage, sur la base d'une demande de freinage, est entré, dans lequel
c) s'il n'est pas entré de signal de demande de freinage dans le système de frein à friction du véhicule de traction et si la décélération (dV_rad/dt, a) détectée de la au moins une remorque (2) dépasse une valeur limite donnée à l'avance, un frein (16) de remorque est activé automatiquement au moyen du dispositif (18) électronique de contrôle et de commande, et dans lequel
d) le contrôle de la au moins une remorque (2), pour savoir si elle est décélérée, s'effectue par un contrôle des signaux de capteurs (20) de vitesse de rotation de roue de la au moins une remorque (2) et/ou par un contrôle d'un capteur (22), d'accélération longitudinale détectant dans le sens de la marche, de la remorque (2) et dans lequel
e) le contrôle du frein à friction du véhicule de traction, pour savoir si un signal de demande freinage est entré dans la commande du système de frein à friction du véhicule de traction en raison d'une demande de freinage, s'effectue au moyen d'un contrôle de la pression de frein de la au moins une remorque (2), et/ou dans lequel
f) le contrôle du frein à friction du véhicule de traction, pour savoir si un signal de demande de freinage est entré dans la commande du système de frein à friction du véhicule de traction en raison d'une demande de freinage, s'effectue au moyen d'un signal électrique de commande de frein passant du véhicule de traction à la remorque (2).

2. Procédé suivant l'une des revendications précédentes, **caractérisé en ce que** l'activation automatique du frein (16) de la au moins une remorque (2) s'effectue par le fait que la force de frein produite est une force de frein continue ou une force de frein pulsée.

3. Procédé suivant la revendication 2, **caractérisé en ce que**, dans le cas de la production d'une force de frein pulsée, au moins l'un des paramètres suivant est variable : la force (pₘₐₓ) de frein appliquée au maximum, la force de frein appliquée au minimum, le temps (tᵤₚ) d'établissement pour l'établissement de la force (pₘₐₓ) de frein s'appliquant au maximum, le temps (t_{hold}) de maintien de la force (pₘₐₓ) de frein s'appliquant au maximum, le temps (t_{down}) de décroissance pour la décroissance de la force (pₘₐₓ) de frein s'appliquant au maximum, le temps (t_{zéro}) sans force de frein pendant lequel une force de frein ne s'applique pas.

4. Installation de freinage automatique d'au moins une remorque (2) d'une combinaison véhicule de traction-remorque, le véhicule de traction ayant comme système de frein de service un frein à friction, à savoir un système de frein à friction électropneumatique sous la forme d'un système (EBS) de frein régulé électroniquement et la remorque, un système de frein de service électropneumatique sous la forme d'un système (TEBS) de frein régulé électriquement, comportant
a) un dispositif (18) électronique de contrôle et de commande, qui contrôle la au moins une remorque (2), pour savoir si la remorque (2) est décélérée dans le sens de la marche, dans laquelle
b) le dispositif (18) électronique de contrôle et de commande est constitué en outre pour contrôler le frein à friction du véhicule de traction, pour savoir si un signal de demande de freinage est entré dans le frein à friction du véhicule de traction, en raison d'une demande de freinage et dans laquelle
c) le dispositif électronique de contrôle et de commande est constitué de manière à ce que, s'il n'est pas entré de signal de demande de freinage dans le frein à friction du véhicule de traction et si la décélération (dV_rad/dt, a) détectée de la au moins une remorque (2) dépasse une valeur donnée à l'avance, activer automatiquement un frein de la remorque, dans laquelle
d) pour contrôler la au moins une remorque (2), pour savoir si elle est décélérée dans le sens de la marche, le dispositif (18) électronique de contrôle et de commande contrôle des signaux de capteur (20) de vitesse de rotation de roue de la remorque (2) et/ou les signaux d'un capteur (22) d'accélération longitudinale détectante, dans le sens de la marche de la remorque (2), et dans laquelle
e) pour contrôle le frein à friction du véhicule de traction, pour savoir si un signal de demande de freinage est entré dans celui-ci, en raison d'une demande de freinage, le dispositif (18) électronique de contrôle et de commande contrôle la pression de frein de la au moins une remorque (2), et/ou dans laquelle
f) pour contrôler le frein à friction du véhicule de traction, pour savoir si un signal de demande de freinage est entré en raison d'une demande de freinage, le dispositif (18) électronique de contrôle et de commande contrôle un signal électrique de commande de frein allant du véhicule de traction à la remorque (2).

5. Installation suivant la revendication 4, **caractérisée en ce que** le dispositif (18) électronique de contrôle et de commande active le frein (16) de la remorque, de manière à ce que la force de frein ainsi appliquée soit une force de frein continue ou une force de frein puisée.

6. Installation suivant la revendication 5, **caractérisée en ce que**, dans le cas de la production d'une force de frein pulsée, au moins l'un des paramètres suivant est variable : la force (pₘₐₓ) de frein appliquée au maximum, la force de frein appliquée au minimum, le temps (tᵤₚ) d'établissement pour l'établissement de la force (pₘₐₓ) de frein s'appliquant au maximum, le temps (t_{hold}) de maintien de la force (pₘₐₓ) de frein s'appliquant au maximum, le temps (t_{down}) de décroissance pour la décroissance de la force (pₘₐₓ) de frein s'appliquant au maximum, le temps (t_{zéro}) sans force de frein pendant lequel une force de frein ne s'applique pas.

7. Installation suivant l'une des revendications 4 à 6, **caractérisée en ce que** la valeur limite donnée à l'avance pour la décélération est d'environ 1 m/s².

8. Installation suivant l'une des revendications 4 à 7, **caractérisée en ce que** le dispositif (18) électronique de contrôle et de commande est monté du côté de la remorque.

9. Installation suivant la revendication 8, **caractérisée en ce que** le dispositif (18) électronique de contrôle et de commande est intégré dans un appareil (ECU) électronique de commande du système de frein, réglé électroniquement, de la remorque (TEBS).
